# EUROPEAN PATENT APPLICATION

(11) **EP 4 241 635 A1**
(43) Date of publication of application: **13.09.2023**
(21) Application number: 22161271.6
(22) Date of filing: 10.03.2022
(51) Int. Cl.: A47J 43/044, A47J 43/07

(54) **TORQUE OUTPUT COMPONENT OF A GEAR SYSTEM FOR A KITCHEN MACHINE, DRIVE UNIT AND AND KITCHEN MACHINE**

(71) Applicant: BSH Hausgeräte GmbH, 81739 München (DE)
(72) Inventor: Brecko, Ales, 3000 Celje (SI); Sedovsek, Aleksander, 3331 Nazarje (SI); Slatinsek, Blaz, 3342 Gornji Grad (SI); Cater, Matej, 3301 Petrovce (SI)

(57) **Abstract**

Disclosed is a torque output component 10 of a gear system for rotating a tool 200 of a kitchen machine 1. The gear system component comprises a gear carrier 11, an output gear 12 rotatably fixed to the gear carrier 11, a snap-fitting means 14 configured to releasably fasten the tool 200 to the torque output component 10, and a tool release means 15 which is movable relative to the output gear 12 and configured to release the tool from the snap-fitting means 14 when moving relative to the output gear in an ejection direction.

Further disclosed is a drive unit 100 with a gear system comprising such torque output component 10, and with an ejection effecting assembly 20. Therein, by manipulation of the ejection effecting assembly 20, the tool release means 15 can be moved relative to the output gear 12.

Moreover, a kitchen machine 1 with such drive unit 100 is disclosed.

## Description

The present invention concerns a torque output component for (in particular of) a kitchen machine, and a drive unit comprising such torque output component. The invention is further concerned with a kitchen machine with such drive unit.

Kitchen machines typically comprise at least one rotatable tool for processing food contained in a bowl, and a drive unit for driving the tool. Therein, the at least one tool may be detachably fixed to the drive unit. In particular, a respective one of different tools (such as a kneader, a whisk, a stirrer or a chopper) may be selectively fixed to the drive unit, such that a user can decide which tool he wishes to use for manipulating a respective food.

The at least one tool is usually driven by means of a gear system connecting the tool with a drive source (such as a crank or an electric motor) comprised by the drive unit. Such gear system may comprise a torque transfer component and a torque output component, wherein the torque transfer component is connected to the drive source and configured to transfer a respective torque to the torque output component and, thereby, to a respective tool connected to the torque output component.

To change the tools of the kitchen machine, a respective tool has to be separated from the torque output component of the gear system. Such separation is usually possible by manually pulling the tool out of a mount thereof.

It is an object of the present invention to facilitate an improved separation of a tool from a drive unit of a kitchen machine.

The object is achieved by a torque output component according to claim 1, by a drive unit according to claim 5 and by a kitchen machine according to claim 11. Advantageous embodiments are disclosed in the dependent claims, the description and the figures.

A torque output component according to the present invention is a component of a gear system for rotating a tool of a kitchen machine. The torque output component comprises a gear carrier, an output gear rotatably fixed to the gear carrier, a snap-fitting means and a tool release means. The output gear (being a toothed wheel) has a centre hole configured to receive at least a portion of a tool rod of the (respective) tool to be rotated. The snap-fitting means is configured to releasably fasten the such inserted tool to the torque output component, in particular to the output gear thereof. The tool release means is movable relative to the output gear and configured to release the tool (when it is fastened, by the snap-fitting means, to the torque output component) from the snap-fitting means. Therein, the release is realised by the tool release means moving, relative to the output gear, in an ejection direction and thereby pushing the tool.

A drive unit according to the present invention is a unit of a kitchen machine. It comprises a drive source (such as a crank or an electric motor), and a gear system with a torque transfer component and with a torque output component according to an embodiment of the present invention. The torque transfer component is configured to be driven by the drive source, and to transfer thus received torque to the torque output component, in particular to the output gear thereof. The drive unit further comprises an ejection effecting assembly adapted to be manipulated by a user. Therein, the tool release means of the torque output component is positioned or positionable in at least one ejection position (relative to the ejection effecting assembly) in which a manipulation of the ejection effecting assembly causes the tool release means to move relative to the output gear of the torque output component and in the ejection direction.

A kitchen machine according to the present invention comprises a drive unit according to an embodiment of the present invention, at least one tool configured to be releasably fastened to the torque output component of the drive unit, and a bowl configured to receive food to be processed by means of the tool.

The present invention thus facilitates that a tool fastened to the torque transfer component can be released indirectly by means of the ejection effecting assembly. Thereby, convenience of performing the ejection is improved. In particular, a user is enabled to remove the tool without having to pull it manually and, thereby, without soiling his hands or even hurting them by hitting a rim of a bowl.

In particular, said movement of the tool release means relative to the output gear and in the ejection direction counteracts an elastic force of the snap-fitting means.

Advantageously, the torque output component further facilitates that the tool (when fastened to the output gear by means of the snap-fitting means) is further manually releasable from the snap-fitting means, by pulling the tool by hand in the ejection direction relative to the output gear.

The kitchen machine preferably is a stationary kitchen device, i.e., an appliance configured to be placed on a support (such as table or benchtop) during utilisation, thereby relieving a user from having to hold the device when using it.

According to advantageous embodiments, the drive unit defines a designated bowl position at which a/the bowl of the kitchen machine is to be placed for processing its content by means of the kitchen machine. In particular, the drive unit may form a tray in which the bowl is to be placed during utilisation of the kitchen machine.

The hole of the output gear may comprise a portion shaped as a prism. Thereby, torque transmission to a tool with said tool rod portion (to be inserted in the hole) correspondingly shaped may be faciliated.

According to advantageous embodiments of the present invention, the torque output component comprises a sleeve configured to extend along at least a portion of the tool rod when the tool is releasably fastened (by means of the snap-fitting means) to the torque output component. Therein, at least a portion of an inner space of the sleeve is preferably shaped as a prism. Thereby, a particularly stable torque transmission to a correspondingly shaped tool rod may be achieved. The sleeve may be at least partially made of metal. It may be attached to the output gear or at least partially formed as an integral extension of the output gear. i.e., such that at least a portion of the sleeve and of the output gear together form a single monolithic piece.

The tool release means of the torque output component may comprise a bevelled and/or a curved surface. It may comprise a surface extending along an ellipsoid, in particular a sphere. According to advantageous embodiments, the tool release means may comprise a dome, in particular a spherical dome such as a hemisphere. Such surfaces provide for a particularly good impact of an element (such as an actuation transmission element as mentioned below) acting on the surface so as to cause a movement of the tool release means relative to the output gear.

According to advantageous embodiments, the snap-fitting means comprises an overhang configured to engage in a depression of the tool rod when this or a portion thereof is inserted into said centre hole of the output gear.

Advantageously, the gear system may comprise a planetary gear set. In particular, the torque transfer component may comprise a sun gear and a ring gear (being an internal gear) both engaging with the output gear, wherein the sun gear is configured to be rotated by means of the drive source, and the ring gear is held stationary (relative to a housing of the drive unit) and surrounds the sun gear and the output gear. To improve stability, at least one further gear may be rotatably fixed to the gear carrier and likewise engage with both the sun gear and the ring gear. The further gear is also rotatable about its axis of rotation.

In particular, the gear system preferably is configured to provide for a rotation of the tool both about a first axis being a centre axis of the tool rod and about a second axis being centre axis of the torque output component, the second axis preferably being different from the first axis. Thereby, a particularly effective processing of food by means of the tool can be accomplished.

The ejection effecting assembly may comprise exactly one, two or more actuator element/s to be pressed, to be translated and/or to be rotated by a user for manipulation of the ejection effecting assembly. In particular, a designated manipulation direction (in which the actuator element/s may be moved by actuation thereof) may be different from the ejection direction.

When manipulated, the actuator element/s may directly impact the tool release element. For instance, the actuator element may comprise an inclined and/or curved surface sliding along the tool release element when the actuator element is manipulated. Thereby, the actuator element may cause a movement of the tool release element relative to the output gear. Alternatively, the actuator element may be configured to impact a further element (such as an actuation transmission element detailed below) upon manipulation, and via the further element the tool release element may then be moved relative to the output gear.

The actuator element/s of such embodiments may be mounted on a housing of the drive unit. Advantageously, the actuator element or at least one of the actuator elements (in case there are various) is mounted so as to be exposed to an environment of the kitchen machine during utilisation thereof. In particular, the (at least one) actuator element may preferably be mounted so as to be directed away from an interior space of the bowl, when this is placed in a designated bowl position the drive unit may define. Thereby, the actuator element can be readily touched and handled by a user wishing to use the ejection effecting assembly, and the actuator element is prevented from being eventually splashed by the processed food.

According to advantageous embodiments of the present invention, the ejection effecting assembly of the drive unit comprises an actuation transmission element configured to be pressed, upon manipulation of the ejection effecting assembly (in particular - in respective embodiments - upon actuation of an actuator element which may form part of the ejection effecting assembly), against the tool release element while sliding along a surface thereof. Thereby, the tool release element may be caused to move relative to the output gear.

The actuation transmission element may be configured to perform a linear movement when pressing against the tool release element. Alternatively, the actuation transmission element may be configured to perform a rotational movement or a combined linear and rotational movement when pressing against the tool release element. According to particular embodiments, the actuation transmission element is configured as a pivotable lever connected to a housing of the drive unit via a hinge.

Preferably, the ejection effecting assembly comprises one or more elastic elements causing the ejection effecting assembly to return into an initial position (relative to a housing of the drive unit) when a manipulation of the ejection effecting assembly is stopped.

According to advantageous embodiments, the gear carrier is rotatable (by means of the torque transfer component) relative to the ejection effecting assembly, so as to position the tool release means respectively either in the at least one ejection position or in at least one inhibiting position in which the ejection effecting assembly is inhibited to cause a movement of the tool release means relative to the output gear. For instance, when the tool release means is in such inhibiting position, it may be unreachable by the manipulated ejection effecting assembly, or manipulation of the ejection effecting assembly may even be blocked, such as by a surface of the torque transfer component, in particular of the gear carrier thereof.

In particular, the tool release means may preferably be rotatable through a sector of ejection positions, wherein in each ejection position of the sector, the tool release means is movable, relative to the output gear, by manipulation of the ejection effecting assembly. Therein, both radii delimiting the sector preferably define a respective or a common sector of inhibiting positions, in each of which the ejection effecting assembly is inhibited to cause a movement of the tool release means relative to the output gear. For a central angle 2α of the sector of ejection positions preferably |α| ≤ 15° or even |α| ≤ 12° holds true, and/or |α| ≥ 5° or even |α| ≥ 8°.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Figure 1:: a kitchen machine according to an exemplary embodiment of the present invention;
- Figure 2a:: an output gear of a torque output component according to an exemplary embodiment of the present invention along with a tool and with an ejection effecting assembly;
- Figure 2b:: the output gear, tool and ejection effecting assembly of Figure 2a as mounted in a portion of a drive unit according to an exemplary embodiment of the present invention; and
- Figure 3:: an ejection effecting assembly, a tool and a torque output component according to an exemplary embodiment of the present invention.

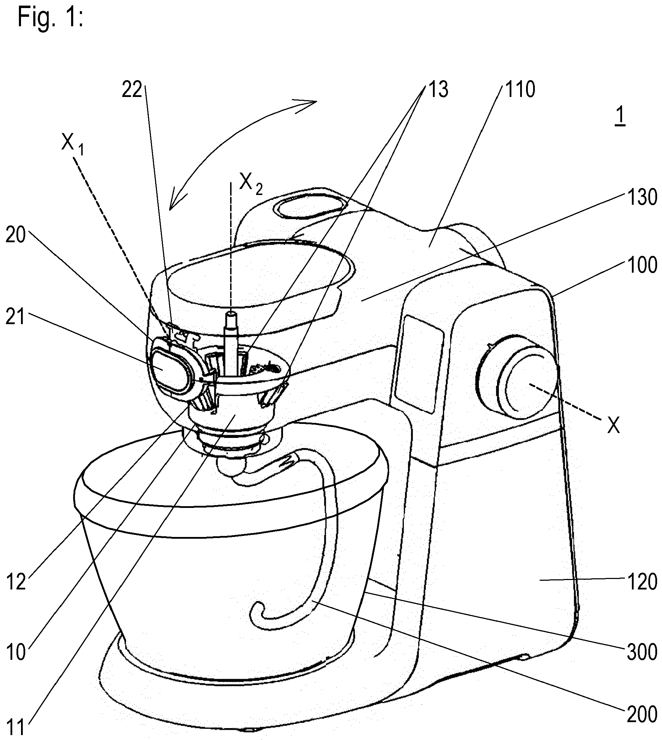

In Figure 1, a kitchen machine 1 according to an exemplary embodiment of the present invention is shown in perspective view, wherein for illustration purposes, a housing 110 of a drive unit 100 and a bowl 300 of the kitchen machine are depicted as partially transparent, such that a tool 200, a torque output component 10, and also those parts of a ejection effecting assembly 20 are visible which in reality are hidden by the housing 110 or the bowl.

The kitchen machine 1 shown in Figure 1 is configured as a stationary kitchen device, i.e., an appliance configured to be placed on a support (such as table or benchtop) during utilisation, thereby relieving a user from having to hold the device when using it.

The kitchen machine 1 is shown in a designated operation condition, in which the tool 200 extends into the bowl 300 placed in a designated bowl position defined by the drive unit 100, and in which thus operation of the kitchen machine for processing food within the bowl 300 by means of the tool 200 is possible.

The drive unit 100 of the kitchen machine 1 comprises a base portion 120 and a toolholder portion 130 to which the torque output component 10 is rotatably fixed. As indicated by a curved double-headed arrow, the toolholder portion 130 is pivotable, relative to the base portion 120, about a pivot axis X. Therein, a parking provision of the drive unit 100 preferably ensures that, after turning off the electric motor (not shown) of the drive unit, the tool 200 is automatically positioned in a parking position as depicted: In this parking position, the toolholder portion 130 can be pivoted about the axis X without the tool 200 jamming, even if the tool 200 is mounted thereon and the bowl 300 is placed in the bowl position (designated for processing content of the bowl) as shown. An automatic positioning of the tool into the parking position may be realised by means of a magnet which a gear carrier 11 of the torque output component 10 may comprise, and by a Hall sensor which an electronic element or elements and/or electronic assembly of the drive unit may include (not shown).

The torque output component 10 forms part of a gear system of the drive unit 100 which in the exemplary embodiment shown in Figure 1 is configured as a planetary gear system. Further to the torque output component 10, the gear system comprises a torque transfer component 30, which is driven by a drive source being an electric motor (not shown). The torque transfer component 30 further comprises a sun gear (not visible in Figure 1) which engages with an output gear 12 of the torque transfer component 30, thus facilitating a torque transfer to the torque output component 10, in particular to the output gear 12 thereof. Accordingly, a rotation of the sun gear causes a rotation of the output gear 12 with the tool 200 fixed thereto about a first axis X₁.

Preferably, the torque transfer component 30 further comprises a stationary ring gear (not shown in Figure 1) surrounding the gear carrier 11 and likewise engaging with the output gear 12, such that a rotation of the sun gear further causes a rotation of the gear carrier 11 (and the tool 200) about a second axis X₂ different from the first axis X₁. Thereby, a particularly effective processing of food by means of the tool can be accomplished. In the exemplary embodiment shown in Figure 1, the rotation of the gear carrier 11 about the second axis X₂ is stabilised by two stabilising gears 13 further comprised by the torque output component 10 and likewise engaging with the (not shown) sun gear and the ring gear surrounding the gear carrier 11.

The drive unit 100 shown in Figure 1 further comprises an ejection effecting assembly 20 which is fixed to the housing 110 of the drive unit 100, in particular to a portion of the housing 110 which comprises the toolholder portion 130 of the drive unit 100. The ejection effecting assembly 20 comprises an actuator element 21 which in the exemplary embodiment shown in Figure 1 is embodied as a button to be pressed for manipulating the ejection effecting assembly 20.

The actuator element 21 of the ejection effecting assembly 20 is exposed to an environment of the kitchen machine 1. As a consequence, the actuator element can be readily reached by a user wishing to use the ejection effecting assembly 20, and it is prevented from being eventually splashed by the processed food.

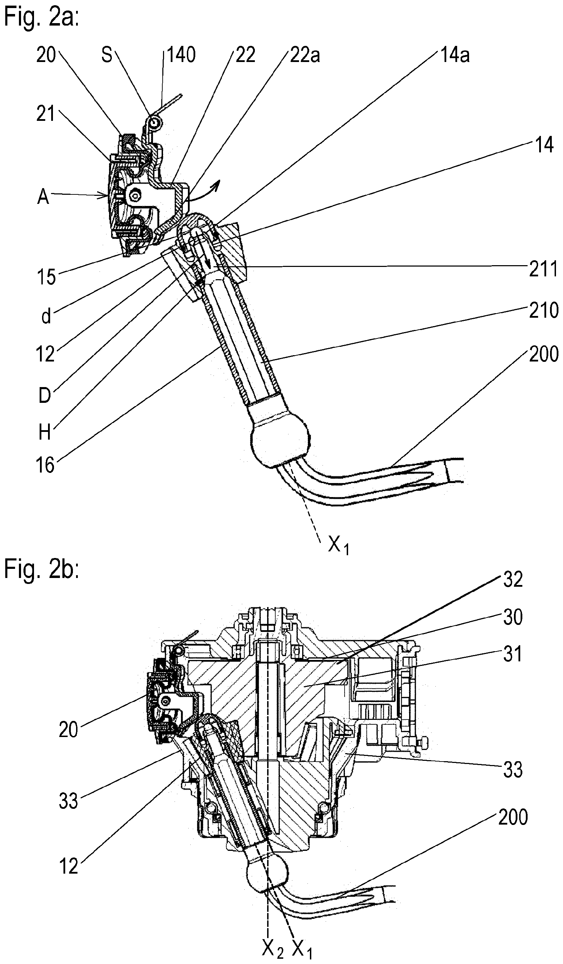

The ejection effecting assembly 20 further comprises an actuation transmission element 22 which in the embodiment shown in the figures comprises a hinged lever element configured to be pressed, by the actuator element 21, when this is actuated by a user, against a tool release element of the torque output component 10: This is illustrated in Figure 2a showing, in a sectional view, an ejection effecting assembly 20 and an output gear 12 of a torque output component 10 according to an exemplary embodiment of the present invention, along with the tool 200.

As thus seen in Figure 2a, the output gear 12 has a centre hole H for receiving a portion 211 of a tool rod 210 of the tool 200. A centre axis of the hole coincides with the first axis X₁ about which the output gear 12 (and the tool 200 releasably fastened thereto) is rotatable.

A snap-fitting means 14, which in the present case is positioned in the hole H and forms part of the output gear 12, is configured to releasably fasten the tool 200 to the torque output component 10, in particular to the output gear 12 thereof, when the portion 211 of the tool rod has been inserted into the hole H, and to thereby hold the tool 200.

In the embodiment depicted in Figure 2a, the releasable fastening of the tool 200 to the output gear 12 is realised by a flexible overhang 14a of the snap-fitting means 14, the flexible overhang 14a engaging with a depression d of the tool rod 210 when this is inserted (at least with a portion 211 thereof) into the hole H; in this manner, the flexible overhang 14a serves as a latch. The flexible overhang 14a can also be realised as an elastic overhang.

In the situation shown in Figure 2a, in which the tool 200 is releasably fastened to the output gear 12 (and thereby, to the torque output component comprising the output gear 12), a sleeve 16 extends along the tool rod 210. In the embodiment shown, the sleeve 16 is fixed to the output gear 12; alternatively, at least a portion of the sleeve might be formed monolithically with the output gear 12, i.e., as an integral extension of the output gear 12. Preferably, the sleeve 16 is at least partially made of metal.

An inner space of the sleeve 16 is shaped as a prism; thereby, a torque transmission to the correspondingly shaped tool rod 210 is facilitated. In the exemplary case shown in Figure 2a, the prism has a hexagonal base; alternatively, the prism might have another polygonal base such as a triangular base, a square base, a pentagonal base or an octogonal base, for example.

According to other embodiments, the hole of the output gear itself may (additionally or alternatively) be shaped as a prism conforming to a surface of the tool rod's portion to be inserted into the hole, thus facilitating a torque transmission.

A tool release means 15 of the torque transfer component partially shown in Figure 2a is movable relative to the output gear 12, against an elastic force of the snap-fitting means and in a tool ejection direction D extending along the first axis X₁. By such movement, the flexible overhang 14a is forced out of the depression d, which causes the tool 200 to be released from the snap-fitting means. Accordingly, the tool 200 can be removed by a user.

In the situation shown in Figure 2a, the output gear 12 is positioned such that the tool release means 15 is located in a tool ejection position in which the movement of the tool release means 15 relative to the output gear 12 can be realised by a user manipulating the actuator element 21 of the ejection effecting assembly 20.

In the embodiment depicted, the actuator element 21 is configured as a press button to be pressed in an actuation direction A, and to thereby cause the actuation transmission element 22 (which in the case depicted comprises a hinged lever element) to swivel about a swivel axis S.

The actuation transmission element 22 thus swivelling in response to the actuation of the actuator element 21 being pressed, with a wedge portion 22a of the actuation transmission element 22, against the tool release element 15 being in the tool ejection position. As a consequence, the wedge portion 22a slides along a surface of the tool release element 15. In the embodiment shown, said surface of the tool release element 15 is shaped as a spherical segment, in particular as a hemisphere, and the wedge portion 22a has a flat surface extending inclined relative to the first axis X₁.

An elastic element 140 (in the embodiment depicted: a spring) provides a restoring force acting on the actuation transmission element 22 and, thereby, urging the actuator element 21 in a direction opposite to the actuation direction A.

Alternatively to using the ejection effecting assembly 20, a user may manually overcome the elastic force of the snap-fitting means 14 by directly pulling the tool in the ejection direction D.

Figure 2b provides a sectional view of the output gear 12, the tool 200 and the ejection effecting assembly 20 of Figure 2a along with further components of a drive unit 100 according to an exemplary embodiment of the present invention. In particular, a torque transfer component 30 of a gear system of the drive unit is seen in Figure 2b. It comprises a sun gear 31 to be driven by an electric motor via a further gear set or a worm shaft of a worm gear (not shown) and a ring gear 33 (being an internal gear) which is stationary (thus fixed relative to a portion of the housing 110 which comprises the toolholder portion 130 of the drive unit 100 as shown in Figure 1). The sun gear 31 is driven by a further gear set or a worm shaft (not shown) on its upper part 32.

The (external) sun gear 31 and the ring gear 33 have a common centre axis which coincides with the second axis X₂ mentioned above with respect to Figure 1. The sun gear 31 and the ring gear 33 each engage with the output gear 12. As a consequence, when the sun gear 31 is rotated about the axis X₂, the output gear 12 (and therewith, the tool 200 when it is fixed to the output gear) is caused to rotate both about the first axis X₁ and - (along with the gear carrier 11 and the stabilising gears 13 shown in Figure 1) about the second axis X₂.

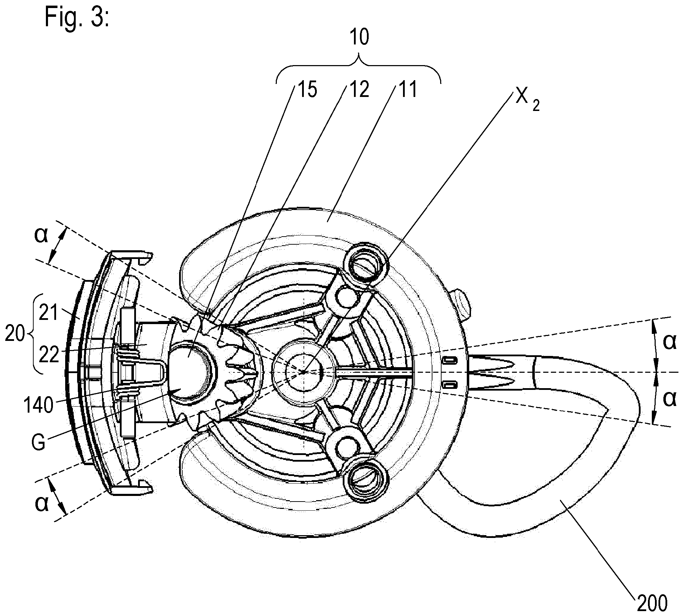

Figure 3 provides a view of the torque output component 10, the ejection effecting assembly 20 and the tool 200, wherein a viewing direction is along the second axis X₂. Therein, a representation of the stabilising gears (referenced 13 in Figure 1) is omitted. In the situation depicted in Figure 3, the tool release means 15 is positioned in an ejection position in which it is movable, relative to the output gear 12, by manipulation of the ejection effecting assembly 20 as detailed above.

The tool release means 15 is rotatable, along with the output gear 12 and the gear carrier 11, about the second axis X₂ through a sector of ejection positions, in each of which the tool release means 15 is movable, relative to the output gear 12, by manipulation of the ejection effecting assembly 20. When the tool release means 15 is rotated to a position outside the sector of ejection positions, manipulation of the ejection effecting assembly 20 is blocked. Indeed, in the situation depicted in Figure 3, the gear carrier 11 is appropriately positioned relative to the ejection effecting assembly 20, such that the actuation transmission element 22 can at least partially intrude, upon actuation of the actuator element 21, into a gap G in the gear carrier 11. However, when the gear carrier 11 is in a position rotated, relative to the ejection effecting assembly 20, from the position shown in Figure 3 in either direction about an angle larger than α, the gear carrier 11 blocks the intrusion of the actuation transmission element 22 into the gap G. Accordingly, the manipulation of the actuator element 21 is blocked.

For a central angle 2α of the sector of ejection positions preferably |α| ≤ 15° or even |α| ≤ 12° holds ture, and/or |α| ≥ 5° or even |α| ≥ 8°. As further indicated in Figure 3, the sector of ejection positions corresponds to a sector of parking positions of the tool 200, which parking positions allow for pivoting the toolholder portion 130 (with the tool 200 mounted therein) relative to the base portion 120, as described above with respect to Figure 1.

Disclosed is a torque output component 10 of a gear system for rotating a tool 200 of a kitchen machine 1. The gear system component comprises a gear carrier 11, an output gear 12 rotatably fixed to the gear carrier 11, a snap-fitting means 14 configured to releasably fasten the tool 200 to the torque output component 10, and a tool release means 15 which is movable relative to the output gear 12 and configured to release the tool from the snap-fitting means 14 when moving relative to the output gear 12 in an ejection direction D.

Further disclosed is a drive unit 100 with a gear system comprising such torque output component 10, and with an ejection effecting assembly 20. Therein, by manipulation of the ejection effecting assembly 20, the tool release means 15 can be moved relative to the output gear 12.

Moreover, a kitchen machine 1 with such drive unit 100 is disclosed.

### Reference signs

- 1: kitchen machine
- 10: torque output component
- 11: gear carrier
- 12: output gear
- 13: stabilising gear
- 14: snap-fitting means
- 14a: overhang
- 15: tool release means
- 16: sleeve

- 20: ejection effecting assembly
- 21: actuator element
- 22: actuation transmission element
- 22a: wedge portion

- 30: torque transfer component
- 31: sun gear
- 32: upper part of sun gear
- 33: ring gear

- 100: drive unit
- 110: housing
- 120: base portion
- 130: toolholder portion
- 140: elastic element

- 200: tool
- 210: tool rod
- 211: portion of tool rod 210

- 300: bowl
- A: actuation direction
- d: depression
- D: ejection direction
- G: gap in the gear carrier
- H: centre hole
- P: designated bowl position
- S: swivel axis
- X: pivot axis
- X₁: first axis of rotation
- X₂: second axis of rotation

## Claims

1. Torque output component (10) of a gear system for rotating a tool (200) of a kitchen machine (1), the torque output component comprising
- a gear carrier (11),
- an output gear (12) with a centre hole (H) configured to receive at least a portion (211) of a tool rod (210) of the tool (200) to be rotated, the output gear (12) being rotatably fixed to the gear carrier (11);
- a snap-fitting means (14) configured to releasably fasten the tool (200) to the torque output component (10), and
- a tool release means (15) which is movable relative to the output gear (12) and configured to release the tool from the snap-fitting means (14) by moving relative to the output gear in an ejection direction (D), thereby pushing the tool rod (210).

2. Torque output component according to claim 1, further comprising a sleeve (16) configured to extend along at least a portion of the tool rod (210), when the tool is releasably fastened to the torque output component, wherein at least a portion of an inner space of the sleeve (16) is shaped as a prism.

3. Torque output component according to one of claims 1 or 2, wherein the tool release means (15) comprises a dome-shaped portion.

4. Torque output component according to one of the preceding claims, wherein the snap-fitting means (14) comprises an overhang (14a) configured to engage in a depression (d) of the tool rod (210), when this is at least partially inserted into said centre hole (H) of the output gear (12).

5. Drive unit (100) of a kitchen machine (1), the drive unit comprising
- a drive source;
- a gear system with a torque output component (10) according to one of the preceding claims, and with a torque transfer component (30) configured to be driven by the drive source and to transfer torque to the torque output component (10); and
- an ejection effecting assembly (20) to be manipulated by a user,
wherein the tool release means (15) of the torque output component (10) is positioned or positionable in at least one ejection position in which it is movable, relative to the output gear (12) and in the ejection direction (D), by manipulation of the ejection effecting assembly (20).

6. Drive unit according to claim 5, wherein the ejection effecting assembly (20) comprises an actuation transmission element (22) configured be pressed, upon manipulation of the ejection effecting assembly, against the tool release element (15) while sliding along a surface thereof.

7. Drive unit according to one of claims 5 or 6, wherein the ejection effecting assembly (20) comprises an actuator element (21) to be pressed, to be translated and/or to be rotated by a user for manipulation of the ejection effecting assembly (20).

8. Drive unit according to claim 7, wherein at least a portion of the actuator element (21) is mounted on a housing (130) of the drive unit (100).

9. Drive unit according to one of claims 7 or 8, wherein the actuator element (21) is at least partially exposed to an environment of the kitchen machine (1), when this is in a designated operation condition in which the tool (200) extends into a bowl (300) positioned in a designated bowl position defined by the drive unit 100.

10. Drive unit according to one of claims 5 to 9, wherein the gear carrier (11) is rotatable relative to the ejection effecting assembly (20), so as to position the tool release means (15) respectively either in the at least one ejection position or in at least one inhibiting position in which the ejection effecting assembly (20) is inhibited to cause a movement of the tool release means (12) relative to the output gear (11).

11. Kitchen machine (1) comprising a drive unit (100) according to one of claims 5 to 10, at least one tool (200) configured to be releasably fastened to the torque output component (10) of the drive unit (100), and a bowl (300) configured to receive food to be processed by means of the tool.
